**Europäisches Patentamt**

**European Patent Office**

**Office européen des brevets**

(19)

(11) Numéro de publication : **0 360 689 B1**

(12) **FASCICULE DE BREVET EUROPEEN**

(45) Date de publication du fascicule du brevet :
17.06.92 Bulletin 92/25

(51) Int. Cl.⁵ : **F16L 37/12**

(21) Numéro de dépôt : **89402573.3**

(22) Date de dépôt : **20.09.89**

(54) **Dispositif de raccord rapide, en particulier pour des conduits de fluide dans un véhicule automobile.**

(30) Priorité : **21.09.88 FR 8812312**

(43) Date de publication de la demande :
**28.03.90 Bulletin 90/13**

(45) Mention de la délivrance du brevet :
**17.06.92 Bulletin 92/25**

(84) Etats contractants désignés :
**BE DE ES GB IT LU NL SE**

(56) Documents cités :
**DE-A- 2 600 611**
**US-A- 831 358**
**US-A- 2 150 765**
**US-A- 2 419 916**

(73) Titulaire : **HUTCHINSON**
**2 rue Balzac**
**F-75008 Paris (FR)**

(72) Inventeur : **Briet, Gilles**
**Le Petit Vallot Neuvy Grandchamp**
**F-71130 Gueugnon (FR)**

(74) Mandataire : **Ramey, Daniel et al**
**Cabinet Ores 6 Avenue de Messine**
**F-75008 Paris (FR)**

EP 0 360 689 B1

Jouve, 18, rue Saint-Denis, 75001 PARIS

## Description

L'invention concerne un dispositif de raccord rapide, destiné en particulier à des tuyaux et conduits tels que ceux d'un circuit de refroidissement d'un moteur de véhicule automobile, ou de chauffage ou de climatisation de l'habitacle d'un véhicule.

Il est déjà bien connu de monter des dispositifs de raccord rapide sur des tuyaux et conduits dans lesquels passe un fluide pour relier à étanchéité soit deux tuyaux ou conduits montés bout à bout, soit un tuyau monté sur un embout ou une tubulure d'arrivée ou de départ de fluide. Ces dispositifs ont l'avantage de réaliser une liaison étanche par un mouvement très simple, de translation ou de rotation sur un quart de tour, par exemple.

Il peut arriver cependant que ce mouvement ne soit pas poursuivi jusqu'à son terme et que le dispositif de raccord rapide ne soit pas verrouillé dans sa position de fixation correcte. Dans ce cas, des vibrations, un mouvement quelconque de l'un des tuyaux, une variation de pression du fluide peuvent provoquer l'ouverture immédiate du dispositif de raccord rapide, la séparation des tuyaux raccordés et des fuites importantes de fluide.

De tels incidents sont notamment susceptibles de se produire sur des chaînes plus ou moins automatisées de montage, par exemple dans l'industrie automobile.

L'invention a pour objet un dispositif de raccord rapide permettant une vérification visuelle immédiate de la fixation correcte du dispositif.

Elle propose un dispositif de raccord rapide, en particulier pour des tuyaux et conduits tels que ceux d'un circuit de chauffage d'un habitacle ou de refroidissement d'un moteur de véhicule automobile, comprenant au moins un doigt d'encliquetage élastiquement déformable pour fixation du dispositif sur une structure complémentaire appropriée, caractérisé en ce qu'il comprend des moyens de confirmation visuelle de la fixation correcte du dispositif, comportant une patte associée au doigt d'encliquetage par des moyens de liaison amenant ladite patte dans une première position quand le doigt d'encliquetage est dans une position de fixation correcte du dispositif, et dans une autre position quand le doigt d'encliquetage est écarté de sa position précitée de fixation.

Ainsi, selon l'invention, la position d'une patte sur le dispositif de raccord rapide permet de vérifier si ce dispositif est fixé correctement ou non.

Selon une autre caractéristique de l'invention, le dispositif comprend une saillie de repérage, formée sur sa surface externe, et qui est masquée par ladite patte quand celle-ci est dans sa première position, et démasquée quand la patte est dans son autre position.

Pour faciliter la vérification visuelle, la patte et cette saillie peuvent être de couleurs contrastées.

Selon un mode de réalisation préféré de l'invention, la patte précitée est montée en rotation autour d'un axe transversal sur le doigt d'encliquetage.

La patte et le doigt d'encliquetage comprennent des rampes inclinées formées en regard l'une de l'autre et propres à coopérer avec une partie de la structure complémentaire, qui s'engage entre ces rampes inclinées au montage du dispositif et provoque le déplacement de ladite patte dans son autre position jusqu'à fixation correcte du dispositif.

Ce dispositif comprend encore des moyens de rappel de ladite patte dans sa première position, qui sont avantageusement constitués par une languette élastiquement déformable, formant ressort, interposée entre ladite patte et le doigt d'encliquetage, et qui peut être formée d'une pièce avec ladite patte, en étant appuyée par son extrémité libre sur le doigt d'encliquetage.

Dans la description qui suit, faite à titre d'exemple, on se réfère aux dessins annexés, dans lesquels:

la figure 1 est une vue schématique en élévation d'un dispositif de raccord rapide selon l'invention, en cours de montage;

la figure 2 est une vue en coupe partielle de ce dispositif, représenté dans sa position de fixation correcte.

Le dispositif selon l'invention, désigné par la référence générale 10, est monté à l'extrémité d'un tuyau ou conduit quelconque 12 de passage de fluide, qui doit être relié à un autre conduit ou embout tubulaire non représenté, mais comportant une structure particulière 14 propre à coopérer avec le dispositif de raccord rapide 10.

Dans la forme de réalisation représentée, celui-ci comprend au moins un doigt longitudinal 16 élastiquement déformable, s'étendant parallèlement à l'axe 18 du dispositif 10 et relié au corps 20 de celui-ci à l'une de ses extrémités. A son extrémité libre opposée, le doigt 16 est formé, sur sa face radialement externe, avec une rampe inclinée 22 raccordée à un décrochement 24 de façon à former un bec ou crochet destiné à venir se verrouiller sur une barrette ou tige transversale 26 de la structure complémentaire 14.

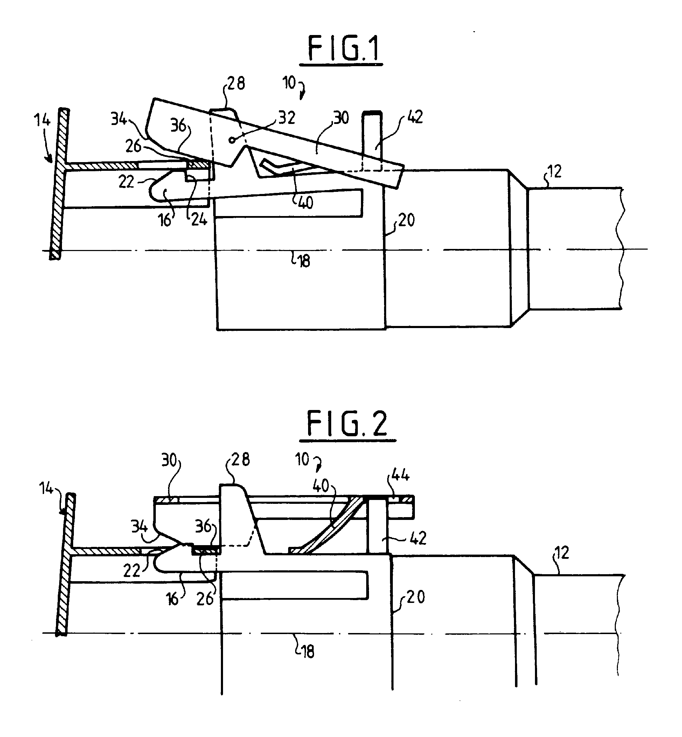

Le doigt d'encliquetage 16 est par ailleurs formé avec une saillie radiale 28, orientée vers l'extérieur, sur laquelle une patte 30 est montée à rotation autour d'un axe transversal 32. La patte 30 peut avoir une section en U, comme on le comprend d'après la figure 2, et est formée à son extrémité libre avec au moins une rampe inclinée 34 raccordée à un bord de butée 36 parallèle à l'axe 18 du dispositif 10. Les dimensions de la patte 30 et son montage à rotation sur la saillie 28 du doigt 16 sont telles que, dans la position normale représentée en figure 2, la barrette 26 de la structure complémentaire 14 se trouve entre la face radialement externe du doigt d'encliquetage 16 et le ou les bords 36 de la patte 30, avec un jeu relativement faible.

La patte 30 comprend une languette 40 formant ressort, qui vient par exemple d'une pièce avec la patte 30 et dont l'extrémité libre est simplement appuyée sur la surface externe du doigt d'encliquetage 16.

Le dispositif 10 comprend encore un téton 42 formé en saillie sur sa surface externe et s'étendant par exemple radialement, en étant aligné avec une découpe ou un orifice 44 de l'extrémité arrière de la patte 30. Ce téton 42 est destiné à être normalement masqué par la patte 30 si celle-ci s'étend parallèlement à l'axe 18 du dispositif de raccord 10, et à être démasqué, en passant à travers la découpe ou l'orifice 44 de la patte 30, si cette dernière est inclinée par rapport à l'axe 18 du dispositif.

Le fonctionnement du dispositif selon l'invention est le suivant :

Quand le dispositif de raccord rapide 10 monté à l'extrémité du tuyau ou conduit 12 est présenté devant le conduit ou l'embout tubulaire auquel il doit être relié, il est orienté de façon à ce que la barrette transversale 26 de la structure complémentaire 14 se trouve en regard des rampes inclinées 22 et 34 du doigt d'encliquetage 16 et de la patte 30.

La patte 30 est alors maintenue, par sa languette ressort 40, dans la position représentée en figure 2, où elle s'étend parallèlement à l'axe 18 du dispositif 10.

Il suffit ensuite de déplacer par translation le dispositif 10 pour engager la barrette transversale 26 entre le doigt d'encliquetage 16 et la patte 30. Au cours de ce mouvement, le doigt d'encliquetage 16 est fléchi radialement vers l'intérieur, comme représenté en figure 1, jusqu'à ce que la barrette 26 ait dépassé le décrochement 24. Le fléchissement du doigt 10 provoque la rotation de la patte 30, dont le bord 36 est en butée sur la barrette 26, et qui démasque alors le téton 42.

Quand le dispositif est dans sa position de fixation correcte représentée en figure 2, le doigt 16 a retrouvé sa position normale et la languette ressort 40 a ramené la patte 30 dans sa position parallèle à l'axe 18, de sorte que le téton 42 est masqué.

On comprend que, quand la patte 30 recouvre le téton 42, le dispositif de raccord rapide est soit dans sa position correcte de fixation sur une structure complémentaire appropriée, soit entièrement dégagé de cette structure. Par contre, si le téton 42 est apparent à travers la patte 30, c'est que la fixation du dispositif de raccord 10 sur la structure complémentaire n'est pas correcte.

Cette vérification visuelle peut encore être améliorée lorsque la patte 30 et le téton 42 sont de couleurs différentes contrastées.

Le dispositif selon l'invention est applicable à toutes sortes de raccords rapides pour conduits de fluide, et notamment dans l'industrie automobile aux conduits des circuits de chauffage ou de climatisation de l'habitacle et de refroidissement du moteur d'un véhicule.

## Revendications

1. Dispositif de raccord rapide, en particulier pour des tuyaux et conduits tels que ceux d'un circuit de chauffage d'un habitacle ou de refroidissement d'un moteur de véhicule automobile, comprenant au moins un doigt d'encliquetage (16) élastiquement déformable pour fixation du dispositif sur une structure complémentaire (14) appropriée, caractérisé en ce qu'il comprend des moyens (30), (42) de confirmation visuelle de la fixation correcte du dispositif, comportant une patte (30) associée au doigt d'encliquetage (16) par des moyens de liaison amenant ladite patte dans une première position quand le doigt d'encliquetage est dans une position de fixation correcte du dispositif, et dans une autre position quand le doigt d'encliquetage est écarté de sa position précitée de fixation.

2. Dispositif selon la revendication 1, caractérisé en ce que la patte (30) est montée à rotation autour d'un axe transversal (32) sur le doigt d'encliquetage (16).

3. Dispositif selon la revendication 1 ou 2, caractérisé en ce qu'il comprend des moyens (40) de rappel de la patte (30) dans sa première position.

4. Dispositif selon la revendication 3, caractérisé en ce que les moyens de rappel comprennent une languette élastiquement déformable (40), formant ressort, interposée entre la patte (30) et le doigt d'encliquetage (16).

5. Dispositif selon la revendication 4, caractérisé en ce que la languette (40) est formée d'une pièce avec la patte (30) et comprend une extrémité libre appliquée à pression sur le doigt d'encliquetage (16).

6. Dispositif selon l'une des revendications 1 à 5, caractérisé en ce qu'il comprend une saillie de repérage (42) formée sur sa surface externe et qui est masquée par la patte (30) quand celle-ci est dans sa première position, et démasquée quand la patte est dans son autre position.

7. Dispositif selon la revendication 6, caractérisé en ce que la patte (30) comprend un trou ou une découpe (44) de passage de ladite saillie (42) de repérage.

8. Dispositif selon l'une des revendications précédentes, caractérisé en ce que la patte et le doigt d'encliquetage comprennent des rampes inclinées (22, 34, 36), formées en regard l'une de l'autre et propres à coopérer avec une partie (26) de la structure complémentaire, qui s'engage entre ces rampes inclinées au montage du dispositif et provoque le déplacement de la patte (30) dans son autre position, jusqu'à fixation correcte du dispositif.

## Patentansprüche

1. Einrichtung zum schnellen Verbinden, insbesondere für Rohre und Leitungen, wie jene eines Heizkreislaufs einer Fahrkabine oder eines Kühlkreislaufs eines Fahrzeugmotors, die zumindest eine elastisch verformbare Sperrklinke (16) aufweist, um die Einrichtung an einem geeigneten komplementären Aufbau (14) zu befestigen, dadurch gekennzeichnet, daß sie Mittel (30), (42) zum visuellen Bestätigen der richtigen Befestigung der Einrichtung aufweist, die eine Klaue (30) umfassen, die über Verbindungsmittel der Sperrklinke zugeordnet ist, welche die Klaue in eine erste Position führen, wenn sich die Sperrklinke in einer Position zum richtigen Befestigen der Einrichtung befindet und in eine andere Position, wenn die Sperrklinke aus ihrer oben genannten Position zum Befestigen geschoben ist.

2. Einrichtung nach Anspruch 1, dadurch gekennzeichnet, daß die Klaue (30) um eine transversale Achse (32) auf der Sperrklinke (16) herum drehbar angebracht ist.

3. Einrichtung nach Anspruch 1 oder 2, dadurch gekennzeichnet, daß sie Mittel (40) zum Zurückführen der Klaue (30) in ihre erste Position aufweist.

4. Einrichtung nach Anspruch 3, dadurch gekennzeichnet, daß die Mittel zum Zurückführen eine elastisch verformbare Zunge (40) aufweisen, die eine Feder bildet, die zwischen die Klaue (30) und die Sperrkline (16) gefügt ist.

5. Einrichtung nach Anspruch 4, dadurch gekennzeichnet, daß die Zunge (40) von einem Teil der Klaue (30) gebildet ist und ein freies Ende aufweist, das einem Druck auf die Sperrklinke (16) unterworfen ist.

6. Einrichtung nach einem der Ansprüche 1 bis 5, dadurch gekennzeichnet, daß sie einen Markierungsvorsprung (42) aufweist, der an ihrer äußeren Oberfläche ausgebildet ist und der durch die Klaue (30) abgedeckt wird, wenn sich diese in ihrer ersten Position befindet und aufgedeckt wird, wenn sich die Klaue in ihrer anderen Position befindet.

7. Einrichtung nach Anspruch 6, dadurch gekennzeichnet, daß die Klaue (30) eine Öffnung oder einen Ausschnitt (44) zum Durchführen des Markierungsvorsprungs (42) aufweist.

8. Einrichtung nach einem der vorgehenden Ansprüche, dadurch gekennzeichnet, daß die Klaue und die Sperrklinke geneigte Ebenen (22, 34, 36) aufweisen, die einander gegenüberliegend ausgebildet sind und geeignet sind, mit einem Teil (26) des komplementären Aufbaus zusammenzuwirken, das zwischen diese geneigten Ebenen zum Anbringen der Einrichtung eingreift und die Verschiebung der Klaue (30) in ihre andere Position bis zu einer richtigen Befestigung der Einrichtung bewirkt.

## Claims

1. A quick coupling device, in particular for pipes and ducts such as those used in a circuit for heating a vehicle cabin or for cooling a vehicle engine, the device comprising at least one elastically deformable snap-fastening finger (16) for fixing the device to a suitable complementary structure (14), the device being characterized in that it comprises means (30,42) for providing visual confirmation that the device has been correctly coupled, said means comprising a tab (30) associated with the snap-fastening finger (16) by link means causing said tab to take up a first position when the snap-fastening finger is in its position corresponding to the device being correctly coupled, and a different position when the snap-fastening finger is displaced from said coupling position.

2. A device according to claim 1, characterized in that the tab (30) is mounted to rotate about a transverse axis (32) on the snap-fastening finger (16).

3. A device according to claim 1 or 2, characterized in that it includes return means (40) for returning the tab (30) to its first position.

4. A device according to claim 3, characterized in that the return means comprise a springforming elastically-deformable tongue (40) interposed between the tab (30) and the snap-fastening finger (16).

5. A device according to claim 4, characterized in that the tongue (40) is integrally formed with the tab (30) and includes a free end pressed against the snap-fastening finger (16).

6. A device according to one of claims 1 to 5, characterized in that it comprises a reference projection (42) formed on its outside surface which is masked by the tab (30) when the tab is in its first position while being unmasked when the tab is in its other position.

7. A device according to claim 6, characterized in that the tab (30) includes a hole or a cut-out (44) for allowing said reference projection (42) to pass therethrough.

8. A device according to one of the preceding claims, characterized in that the tab and the snap-fastening finger include inclined ramps (22,34,36) formed facing one another and suitable for co-operating with a portion (26) of the complementary structure that engages between said inclined ramps while the device is being coupled, thereby causing the tab (30) to be displaced into its said other position until the device reaches its correct coupling position.

EP 0 360 689 B1

## FIG.1

## FIG.2